# EUROPEAN PATENT SPECIFICATION

(11) **EP 1 886 859 B1**
(45) Date of publication and mention of the grant of the patent: **20.04.2011**
(21) Application number: 07015202.0
(22) Date of filing: 02.08.2007
(51) Int. Cl.: B60J 10/08, B60R 13/06

(54) **Sealing structure of back door opening**
Dichtungsstruktur für eine Hintertüröffnung
Structure étanche de joint d'étanchéité pour ouverture de porte arrière

(30) Priority: 08.08.2006 JP 2006215499; 20.06.2007 JP 2007162215
(43) Date of publication of application: 13.02.2008
(73) Proprietor: NISSAN MOTOR CO., LTD., Yokohama-shi, Kanagawa 221-0023 (JP)
(72) Inventor: Suzuki, Naoaki, Atsugi-shi Kanagawa 243-0123 (JP); Mori, Takeshi, Atsugi-shi Kanagawa 243-0192 (JP)
(74) Representative: Grünecker, Kinkeldey, Stockmair & Schwanhäusser Anwaltssozietät

(56) References cited:
- DE-A1- 19 651 733
- JP-A- 3 281 429
- JP-A- 4 331 642
- JP-A- 10 151 999
- JP-A- 58 026 655
- JP-A- 60 088 658
- US-A1- 2005 064 135

## Description

The present invention relates to a sealing structure of a back door opening being suitable for a lifting system back door and a lateral opening system back door according to the preamble of independent claim 1.

A conventional sealing structure of a back door opening has a construction in which a weatherstrip as a sealing member is attached onto a flange formed along the back door opening of a body panel. With such a construction, sealing property for the back door opening when the back door is closed is ensured.

This weatherstrip includes a base member having a substantial U-shape in cross section, which is assembled to the flange. Moreover, the weatherstrip includes a pantograph-like hollow seal member having an inclined protrusion brought into elastic contact with an inner surface of the back door (refer to Japanese Utility Model Unexamined Publication No. H4-95574 (published in 1992)).

Incidentally, as an opening/closing system of the back door, there is a lifting system of lifting the back door upward of a vehicle. Moreover, as such an opening/closing system, there is a lateral opening system of opening the back door in the vehicle width direction. The lateral opening system includes both of a so-called double-doored system of individually opening and closing two back doors in the vehicle width direction and a system of opening and closing one back door in the vehicle width direction.

Here, on an upper end edge of the back door opening, a direction where the back door is brought into press contact with the weatherstrip (direction where the back door approaches the weatherstrip) when the back door is closed differs between the lifting system and the lateral opening system. Therefore, it is necessary to allow an attachment angle of the weatherstrip as well as the flange to differ between the lifting system and the lateral opening system. For example, in the case of the back door of the lateral opening system, the attachment angle of the weatherstrip is set at 0 degree (horizontal direction substantially along a line in the vehicle fore-and-aft direction). As opposed to this, in the case of the back door of the lifting system, it is necessary to incline the weatherstrip upward while setting the attachment angle of the weatherstrip at approximately 70 degrees with respect to the line in the vehicle fore-and-aft direction.

Moreover, document JP 03-2814219 discloses a sealing structure according to the preamble of claim 1.

In the conventional sealing structure of the back door opening, as described above, the attachment angle of the weatherstrip differs depending on the opening/closing systems of the back door. Accordingly, there has been a problem that it is necessary to fabricate different sealing structures of body panels in accordance with the opening/closing systems of the back door, resulting in a corresponding cost increase.

The present invention has been made in order to solve the conventional problem as described above. It is an object of the present invention to provide a sealing structure of a back door opening as indicated above, which is capable of reducing the cost by providing commonality to the sealing structures of the lifting system and the lateral opening system.

According to the present invention, said object is solved by a sealing structure according to claim 1.

Further embodiments are disclosed in the dependent claims.

The invention will now be described with reference to the accompanying drawings wherein;
FIG. 1A is a perspective view of a rear of a vehicle having a back door of a lifting system, showing a sealing structure of a back door opening according to a first embodiment;
FIG. 1B is a perspective view of a rear of a vehicle having a back door of a lateral opening system, showing the sealing structure of the back door opening according to the first embodiment;
FIG. 2 is an enlarged cross-sectional view along a line A-A of FIG 1A, showing a state before such a lifting system back door is closed;
FIG. 3 is an enlarged cross-sectional view along the line A-A of FIG. 1A, showing a state where the lifting system back door is closed;
FIG. 4 is an enlarged cross-sectional view along a line B-B of FIG. 1B, showing a state where such a lateral opening system back door is closed;
FIG. 5 is an enlarged cross-sectional view along a line C-C of FIG. 1A, showing a state where the lifting system back door is closed;
FIG 6 is an enlarged cross-sectional view along a line D-D of FIG. 1B, showing a state where the lateral opening system back door is closed;

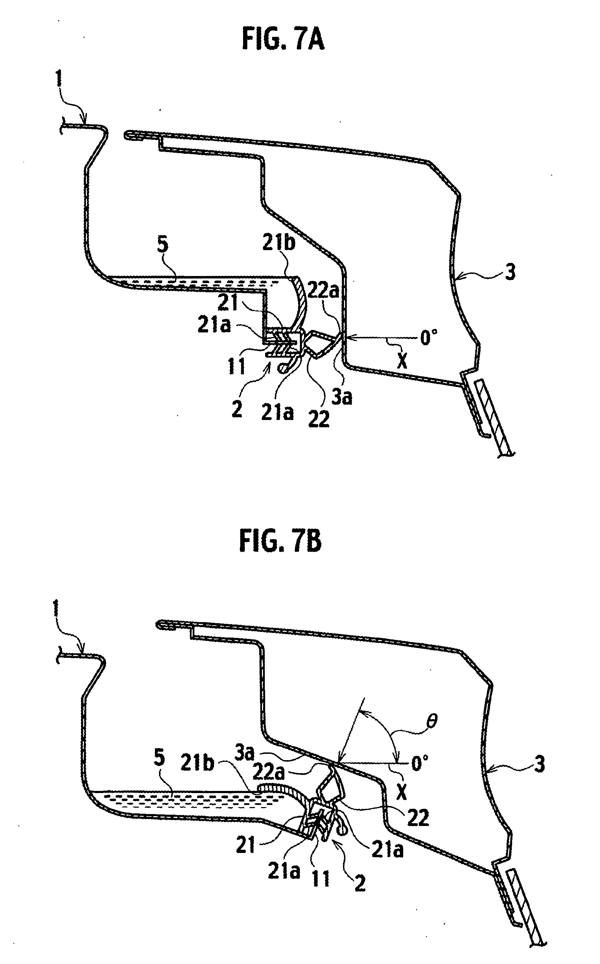

FIG. 7A is a view showing a state where a weatherstrip is attached onto a flange so that a hollow seal member can abut perpendicularly on an inner surface of the lateral opening system back door when the back door is closed;
FIG. 7B is a view showing a state where the weatherstrip is attached onto a flange so that the hollow seal member can abut perpendicularly on an inner surface of the lifting system back door when the back door is closed;
FIG. 8 is an enlarged cross-sectional view showing a state where a lifting system back door in a second embodiment is closed; and
FIG. 9 is an enlarged cross-sectional view showing a state where a lateral opening system back door in the second embodiment is closed.

A description will be made below in detail of specific embodiments to which the present invention is applied while referring to the drawings.

### (First Embodiment)

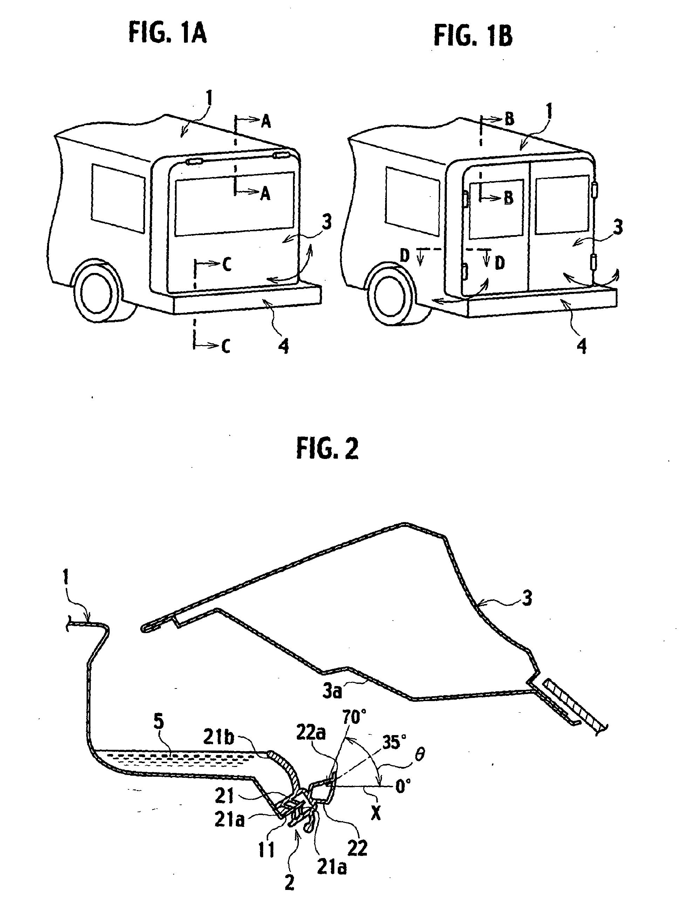

A first embodiment is an example where a sealing structure of a back door opening according to the present invention is applied to a vehicle including a lifting system back door of FIG. 1A, in which a back door 3 is lifted upward of the vehicle, and to a vehicle including a lateral opening system back door of FIG. 1B, in which back doors 3 are opened in the vehicle width direction. Note that the lateral opening system back door includes both of a so-called double-doored system (type of FIG. 1B) of individually opening and closing two back doors in the vehicle width direction and a system (not shown) of opening and closing one back door in the vehicle width direction.

In the sealing structure of the back door opening according to the first embodiment, as shown in FIG. 2 to FIG. 6, a base member 21 of a weatherstrip 2 is engaged with a flange 11 formed along a back door opening of a body panel 1. In such a way, sealing property between the body panel 1 and the back door 3 is ensured when the back door 3 is closed by a hollow seal member 22 of the weatherstrip 2.

As shown in FIG. 2, the base member 21 of the weatherstrip is formed into a substantial U-shape in cross section. Moreover, on opposite surfaces in an inside of the base member 21, there are formed a plurality of retaining ribs 21a for inhibiting the base member 21 from falling off from the flange 11 in such a manner that the retaining ribs 21a are engaged with the flange 11, and are thereby brought into press contact with the flange 11.

The hollow seal member 22 of the weatherstrip 2 is formed into a pantograph shape (substantially rhombus shape) having an inclined protrusion 22a brought into elastic contact with a back door inner surface 3a. Moreover, the hollow seal member 22 is folded by being pushed by the back door 3 while having reaction force allowing the hollow seal member 22 to be restored. The inclined protrusion 22a acts to control a lying direction of the hollow seal member 22 when the hollow seal member 22 is pushed by the back door inner surface 3a. Moreover, the inclined protrusion 22a acts to hermetically seal a gap caused between the back door inner surface 3a and the hollow seal member 22 by unevenness in contact between the back door 3 and the weatherstrip 2. The inclined protrusion 22a is formed so as to be directed to an outside (upward of a vehicle body) of the back door opening with respect to an attachment angle of the weatherstrip 2 onto the flange 11. In such a way, the collapse direction of the hollow seal member 22 can be made to be directed to the outside of the back door opening.

The attachment angle of the weatherstrip 2 on an upper end edge of the back door opening is set within an inclination angle range θ between a first angle (0 degree as the horizontal direction along a line X in the vehicle fore-and-aft direction) and a second angle (predetermined angle made with respect to the line X in the vehicle fore-and-aft direction). The first angle is an angle in which the weatherstrip 2 is attached so that the hollow seal member 22 can abut perpendicularly on the back door inner surface 3a when the lateral opening system back door shown in FIG. 1B is closed. The second angle is an angle in which the weatherstrip 2 is attached so that the hollow seal member 22 can abut perpendicularly on the back door inner surface 3a when the lifting system back **door shown in** **FIG. 1A** **is closed.**

In the lateral opening system back door, the best sealing performance is obtained when the weatherstrip 2 is attached at the angle of 0 degree as the horizontal direction. Meanwhile, in the lifting system back door, the best sealing performance is obtained when the weatherstrip 2 is attached to be inclined at 70 degrees. Heretofore, the weatherstrip 2 has been attached at 0 degree and 70 degrees in the lateral opening system back door and the lifting system back door, respectively. However, in the first embodiment of the present invention, the attachment angle of the weatherstrip 2 is set at an inclination angle of 35 degrees, which is just a middle between the first angle (0 degree) and the second angle (70 degrees), so that the sealing performance of the weatherstrip 2 can be ensured in both of the lateral opening system back door and the lifting system back door.

Moreover, on a side wall of the base member 21 on a lying direction side of the hollow seal member 22, a lying control rib 21b that controls the lying of the hollow seal member 22 is formed integrally. The lying control rib 21 b is formed to be longer so that a tip end thereof can protrude to an outside of the collapsed hollow seal member 22.

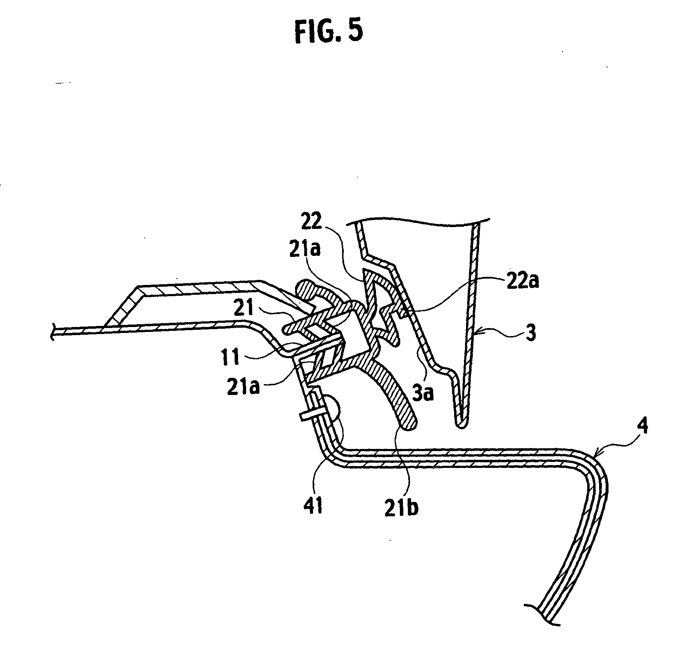

Furthermore, as shown in FIG. 5, a construction is adopted, in which a fixing part 41 for a bumper 4 is formed at a position hidden by the lying control rib 21b in the body panel 1 on a lower end edge of the back door opening. The fixing part 41 is, for example, a bolt and the like.

Next, a description will be made of functions and effects of the sealing structure of the back door opening according to the first embodiment.

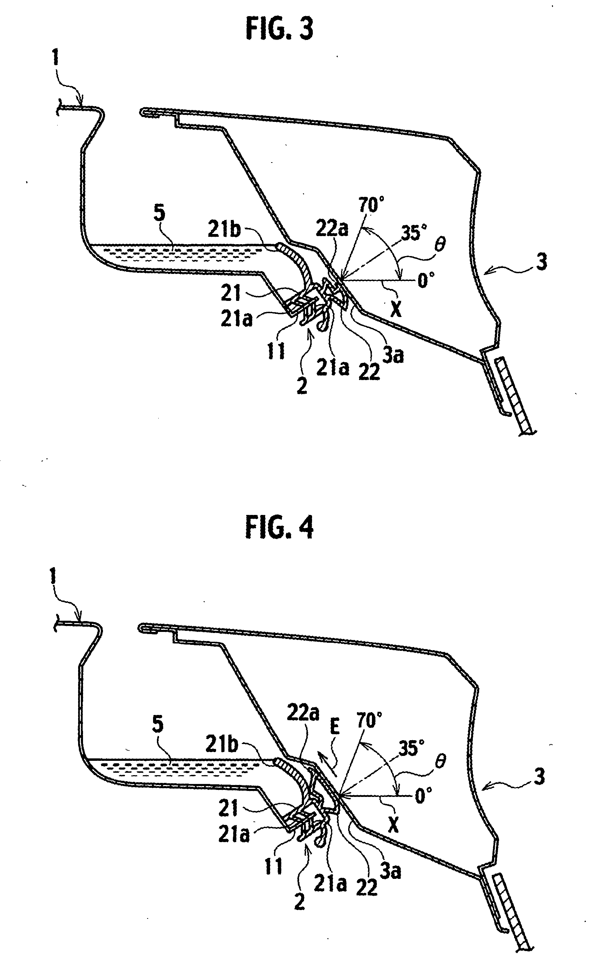

On the upper end edge of the back door opening, a seal mode as shown in FIG. 3 is formed in the case of the lifting system back door, and a seal mode as shown in FIG. 4 is formed in the case of the lateral opening system back door.

First, in the lifting system back door, when the back door 3 is closed, as shown in FIG. 3, the back door inner surface 3a abuts on the inclined protrusion 22a in the hollow seal member 22 at the angle of 70 degrees with respect to the weatherstrip 2 with the attachment angle of 35 degrees. Then, the hollow seal member 22 is pushed by the back door 3, is folded properly with the reaction force allowing the hollow seal member 22 to be restored, and seals the back doors 3 by means of elastic force thereof.

Meanwhile, in the lateral opening system back door, when the back door 3 is closed, as shown in FIG. 4, the back door inner surface 3a abuts on the inclined protrusion 22a in the hollow seal member 22 at the angle of 0 degree as the horizontal direction with respect to the weatherstrip 2 with the attachment angle of 35 degrees. Then, the hollow seal member 22 is pushed by the back door 3, and is collapsed while being biased to the outside direction (upward direction of the vehicle body) of the back door opening. At this time, the hollow seal member 22 is collapsed so as to lie in the outside direction of the back door opening as shown by arrow E in FIG. 4. However, the hollow seal member 22 is supported by the lying control rib 21b formed integrally on the base member 21, and is controlled from lying. Then, when the back door 3 is completely closed, the collapsed hollow seal member 22 seals the back door 3 by means of the elastic force thereof.

On the lower end edge of the back door opening, a seal mode between the weatherstrip 2 and the back door 3 becomes the same seal mode as that on the upper end edge of the back door opening. However, as shown in FIG. 5, a cross-sectional shape of the weatherstrip 2 on the lower end edge becomes a shape turned upside down by 180 degrees from the upper end edge.

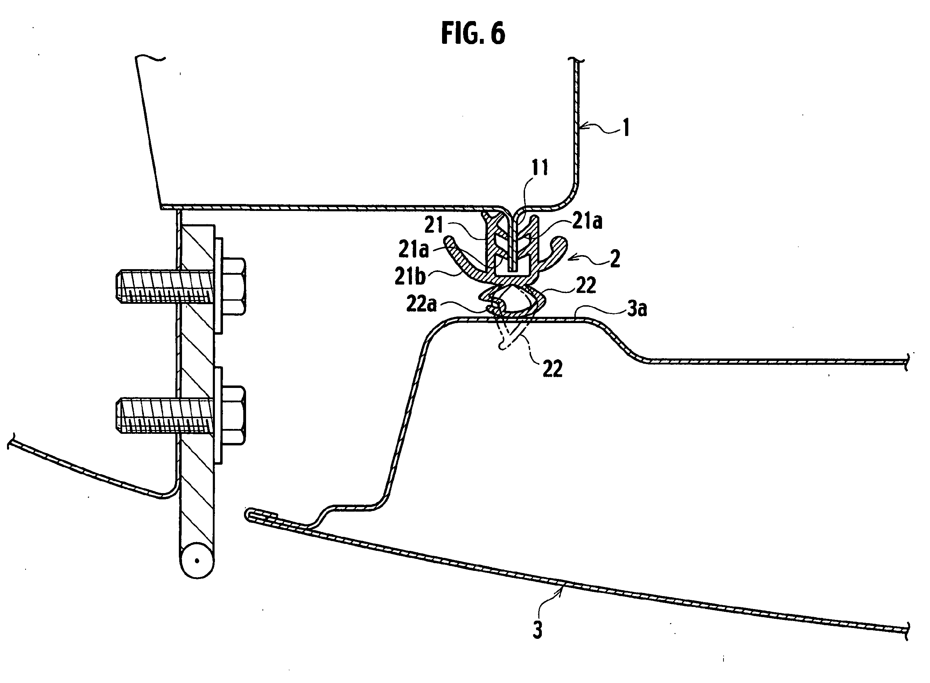

On a side edge of the back door opening, there is no large difference in approach angle of the back door 3 to the weatherstrip 2 between the lifting system back door and the lateral opening system back door. Therefore, the back door 3 abuts on the weatherstrip 2 in the same way between both of the systems, and seal modes of both thereof become substantially the same. Specifically, in both of the case of the lifting system back door and the case of the lateral opening system back door, the back door 3 abuts on the weatherstrip 2 at substantially the same angle. Accordingly, as shown in FIG. 6, the hollow seal member 22 is collapsed perpendicularly to the back door inner surface 3a. Then, when the back door 3 is completely closed, the hollow seal member 22 seals the back door 3 by means of elastic force when the hollow seal member 22 is collapsed in a direction perpendicular to a protruding direction of the flange 11.

As described above, in the sealing structure of the back door opening according to the first embodiment, the attachment angle of the weatherstrip 2 is set at the inclination angle of 35 degrees, which is just the middle between the first angle (0 degree) and the second angle (70 degrees). In such a way, commonality can be provided to the sealing structure of the lifting system back door and the sealing structure of the lateral opening system back door. Therefore, an effect that it becomes possible to reduce manufacturing cost is obtained.

Moreover, the inclined protrusion 22a is formed into a shape to be directed to the outside of the back door opening with respect to the attachment angle (35 degrees) of the weatherstrip 2, and the lying control rib 21b that controls the lying of the hollow seal member 22 is formed integrally on the base member 21 on the lying direction side of the hollow seal member 22. In such a way, even if the attachment angle of the weatherstrip 2 is set at the inclination angle of 35 degrees, which is just the middle between the first angle (0 degree) and the second angle (70 degrees), it becomes possible to control the lying of the hollow seal member 22.

Furthermore, when the attachment angle of the weatherstrip 2 is set at the inclination angle of 35 degrees, which is just the middle between the first angle (0 degree) and the second angle (70 degrees), a cross-sectional area of a water passage on the upper end edge of the opening is narrowed in the case of the lifting system back door. Therefore, there is an apprehension that, when the back door 3 is lifted, rainwater adhered onto an upper end surface of the back door 3 may flow into a water passage 5, overflow from the water passage 5, and flow down into a vehicle cabin. However, in the first embodiment, on the side wall of the base member 21 in the weatherstrip 2, the lying control rib 21b is formed, in which the tip end protrudes to the upward direction of the vehicle body more than the collapsed hollow seal member 22. In such a way, the cross-sectional area of the water passage can be ensured, and it becomes possible to prevent the water from flowing down into the vehicle cabin from the back door opening.

Moreover, in the first embodiment, the fixing part 41 for the bumper 4 is provided at the position hidden by the lying control rib 21b in the body panel 1 on the lower end edge of the back door opening. In such a way, it becomes possible to allow the lying control rib 21b to function as a design part that covers and hides the fixing part 41 for the bumper 4.

### (Second Embodiment)

Next, a description will be made of a second embodiment to which the present invention is applied. In the second embodiment, the same constituent portions as those of the first embodiment will not be shown, or the same reference numerals will be added thereto to omit a description thereof, and a description will be made only of different points.

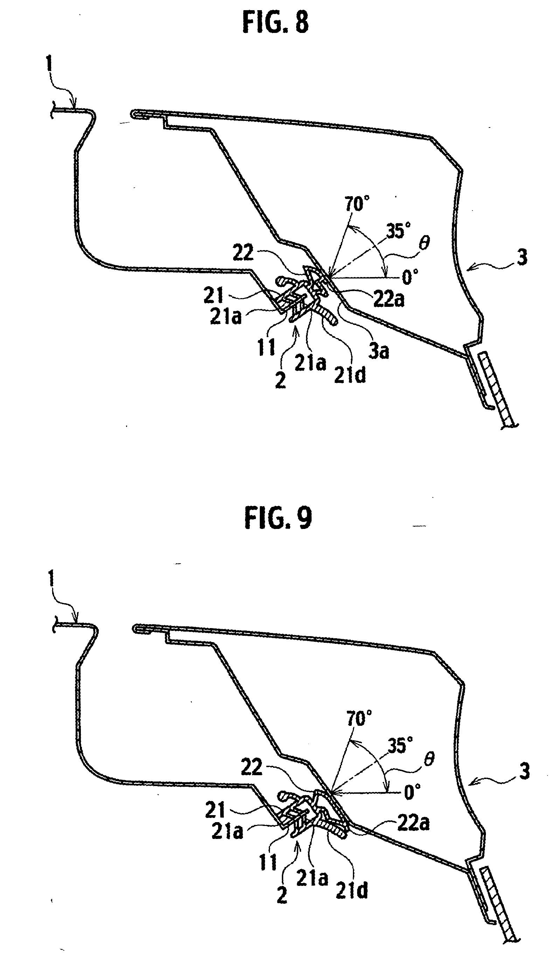

In a sealing structure of a back door opening in the second embodiment, a portion provided with the hollow seal member 22 and the lying control rib 21 is reversed to that in the structure of the first embodiment. Specifically, as shown in FIGS. 8 and 9, an inclined protrusion 22a of the second embodiment is formed toward an inside (downward direction of the vehicle body) of the back door opening with respect to the attachment angle (35 degrees) of the weatherstrip 2 on the contrary to the inclined protrusion 22a of the first embodiment, which is directed to the outside of the back door opening. Moreover, a lying control rib 21d is formed integrally on the side wall of the base member 21 on the lying direction side of the hollow seal member 22.

In the sealing structure of the back door opening according to the second embodiment, as described above, the attachment angle of the weatherstrip 2 is set at the inclination angle of 35 degrees, which is just the middle between the first angle (0 degree) and the second angle (70 degrees). In such a way, as in the first embodiment, the commonality can be provided to the sealing structure of the lifting system back door and the sealing structure of the lateral opening system back door. Therefore, the effect that it becomes possible to reduce the manufacturing cost is obtained.

Moreover, the construction is adopted, in which the inclined protrusion 22a is formed into the mode to be directed to the inside of the back door opening with respect to the attachment angle (35 degrees) of the weatherstrip 2, and the lying control rib 21d that controls the lying of the hollow seal member 22 is formed integrally on the base member 21 on the lying direction side of the hollow seal member 22. In such a way, even if the attachment angle of the weatherstrip 2 is set at the inclination angle of 35 degrees, which is just the middle between the first angle (0 degree) and the second angle (70 degrees), it becomes possible to control the lying of the hollow seal member 22.

### (Other Embodiments)

The description has been made above of the first embodiment and the second embodiment, to which the present invention is applied, with reference to the drawings. However, the present invention is not limited to the above-described embodiments. For example, in the above-described first and second embodiments, the attachment angle of the weatherstrip 2 is set at the inclination angle of 35 degrees, which is just the middle between the first angle (0 degree) suitable for the case of the lateral opening system back door and the second angle (70 degrees) suitable for the case of the lifting system back door. However, the attachment angle of the weatherstrip 2 just needs to be an inclination angle between the first angle (0 degree) and the second angle (70 degrees). It is most desirable that the attachment angle of the weatherstrip 2 be set at an inclination angle of 35 to 40 degrees.

Moreover, in the above-described first and second embodiments, the hollow seal member 22 of the weatherstrip 2 is formed into the pantograph shape including the inclined protrusion 22a brought into elastic contact with the back door inner surface 3a. However, a hollow shape of the seal member 22 is arbitrary.

## Claims

1. A sealing structure of a back door opening being suitable for a lifting system back door (3) and a lateral opening system back door (3), comprising:
a body panel (1) comprising a flange (11) formed along the back door opening; and
a weatherstrip (2) attached onto the flange (11), the weatherstrip (2) comprising:
a base member (21) engaged with the flange (11); and
a hollow seal member (22) for ensuring sealing property between the body panel (1) and the lifting system back door (3) or the lateral opening system back door (3) when the back door (3) is closed,
wherein an attachment angle of the weatherstrip (2) onto the flange (11) on an upper edge of the back door opening is set at an inclination angle between a first angle and a second angle, the first angle being an angle in which the weatherstrip (2) is attached so that the hollow seal member (22) can abut perpendicularly on a back door inner surface (3a) when the lateral opening system back door (3) is closed, and the second angle being an angle in which the weatherstrip (2) is attached so that the hollow seal member (22) can abut perpendicularly on the back door inner surface (3a) when the lifting system back door (3) is closed,
**characterized in that**
an inclined protrusion (22a), which controls a lying direction (E) of the hollow seal member (22) when the hollow seal member (22) is pushed by the back door inner surface (3a), is formed on the hollow seal member (22), and
a lying control rib (21b), which controls lying of the hollow seal member (22), is provided integrally on the base member (21) on a lying direction side of the hollow seal member (22).

2. A sealing structure of a back door opening according to claim 1, wherein the first angle and the second angle are 0 degree and 70 degrees with respect to a line (X) in a vehicle fore-and-aft direction, respectively.

3. A sealing structure of a back door opening according to claim 2, wherein the attachment angle of the weatherstrip (2) is within a range from 35 to 40 degrees with respect to the line (X) in the vehicle fore-and-aft direction.

4. A sealing structure of a back door opening according to claim 1, wherein the hollow seal member (22) is formed into a pantograph shape.

5. A sealing structure of a back door opening according to claim 1 or 4, wherein the lying control rib (21b) is formed integrally on the base member (21) so that a tip end of the lying control rib (21 b) can protrude to an outside of the hollow seal member (22) collapsed by the back door (3).

6. A sealing structure of a back door opening according to claim 5, wherein a fixing part (41) for a bumper (4) is formed at a position hidden by the lying control rib (21 b) in the body panel (1) on a lower end edge of the back door opening.

## Patentansprüche

1. Dichtungsaufbau einer Rücktüröffnung, die für eine Hubsystem- Rücktür (3) und eine Seitenöffnungssystem- Rücktür (3) geeignet ist, aufweisend:
ein Karosseriepanel (1), aufweisend einen Flansch (11), gebildet entlang der Rücktüröffnung; und einen Dichtungsstreifen (2), verbunden auf dem Flansch (11), wobei der Dichtungsstreifen (2) aufweist:
ein Basisteil (21) im Eingriff mit dem Flansch (11); und
ein hohles Dichtungsteil (22) zum Sicherstellen der Dichtungseigenschaften zwischen dem Karosseriepanel (1) und der Hubsystem- Rücktür (3) oder der Seitenöffnungssystem- Rücktür (3), wenn die Rücktür (3) geschlossen ist,
wobei ein Befestigungswinkel des Dichtungsstreifens (2) auf dem Flansch (11) an einer oberen Kante der Rücktüröffnung mit einem Neigungswinkel zwischen einem ersten Winkel und einem zweiten Winkel festgelegt ist, wobei der erste Winkel ein Winkel ist, in dem der Dichtungsstreifen (2) so verbunden ist,
dass das hohle Dichtungsteil (22) in senkrecht an einer Rücktür- Innenoberfläche (3a) anliegen kann, wenn die Seitenöffnungssystem- Rücktür (3) geschlossen ist, und der zweite Winkel ein Winkel ist, in dem der Dichtungsstreifen (2) so verbunden ist, dass das hohle Dichtungsteil (22) senkrecht an der Rücktür- Innenoberfläche (3a) anliegen kann, wenn die Hubsystem- Rücktür (3) geschlossen ist,
**dadurch gekennzeichnet, dass**
ein geneigter Vorsprung (22a), der eine Lagerrichtung (E) des hohlen Dichtungsteils (22) steuert, wenn das hohle Dichtungsteil (22) durch die Rücktür- Innenoberfläche (3a) gedrückt wird, an dem hohlen Dichtungsteil (22) gebildet wird, und
eine Lagersteuerrippe (21 b), die die Lage des hohlen Dichtungsteils (22) steuert, einstückig an dem Basisteil (21) auf einer Lagerrichtungsseite des hohlen Dichtungsteils (22) vorgesehen ist.

2. Dichtungsaufbau einer Rücktüröffnung nach Anspruch 1, wobei der erste Winkel und der zweite Winkel jeweils 0 Grad und 70 Grad in Bezug auf eine Linie (X) in einer Vorwärts- Rückwärts- Richtung des Fahrzeuges betragen.

3. Dichtungsaufbau einer Rücktüröffnung nach Anspruch 2, wobei der Verbindungswinkel des Dichtungsstreifens (2) innerhalb eines Bereiches von 35 bis 40 Grad in Bezug auf die Linie (X) in einer Vorwärts- Rückwärts- Richtung des Fahrzeuges ist.

4. Dichtungsaufbau einer Rücktüröffnung nach Anspruch 1, wobei das hohle Dichtungsteil (22) in einer Storchschnabelform gebildet ist.

5. Dichtungsaufbau einer Rücktüröffnung nach Anspruch 1 oder 4, wobei die Lagersteuerrippe (21 b) einstückig an dem Basisteil (21) gebildet ist, so dass ein oberstes Ende der Lagersteuerrippe (21 b) nach einer Außenseite des hohlen Dichtungsteils (22), zusammengedrückt durch die Rücktür (3), vorspringen kann.

6. Dichtungsaufbau einer Rücktüröffnung nach Anspruch 5, wobei ein Befestigungsteil (41) für einen Dämpfer (4) an einer Position, verborgen durch die Lagersteuerrippe (21 b) in dem Bodenpanel (1) an einer unteren Endkante der Rücktüröffnung, gebildet ist.

## Revendications

1. Structure d'étanchéité d'une ouverture de portière arrière, appropriée pour une portière arrière à système de levage (3) et une portière arrière à système à ouverture latérale (3), comprenant :
un panneau de corps (1) comprenant un rebord (11) formée le long de l'ouverture de portière arrière ; et
une bande d'étanchéité (2) fixée sur le rebord (11), la bande d'étanchéité (2) comprenant :
un élément de base (21) en prise avec le rebord (11) ; et
un élément d'étanchéité creux (22) pour garantir une propriété d'étanchéité entre le panneau de corps (1) et la portière arrière à système de levage (3) ou la portière arrière à système à ouverture latérale (3) lorsque la portière arrière (3) est fermée,
dans laquelle un angle de fixation de la bande d'étanchéité (2) sur le rebord (11) sur un bord supérieur de l'ouverture de portière arrière est réglé à un angle d'inclinaison entre un premier angle et un second angle, le premier angle étant un angle dans lequel la bande d'étanchéité (2) est fixée de sorte que l'élément d'étanchéité creux (22) puisse prendre appui perpendiculairement sur une surface intérieure de portière arrière (3a) lorsque la portière arrière à système à ouverture latérale (3) est fermée, et le second angle étant un angle dans lequel la bande d'étanchéité (2) est fixée de sorte que l'élément d'étanchéité creux (22) puisse prendre appui perpendiculairement sur la surface intérieure de portière arrière (3a) lorsque la portière arrière à système de levage (3) est fermée,
**caractérisé en ce que**
une protubérance inclinée (22a), qui commande une direction de positionnement étendu (E) de l'élément d'étanchéité creux (22) lorsque l'élément d'étanchéité creux (22) est poussé par la surface intérieure de portière arrière (3a), est formée sur l'élément d'étanchéité creux (22), et
une nervure de commande de positionnement étendu (21b), qui commande le positionnement étendu de l'élément d'étanchéité creux (22), est prévue de façon intégrée sur l'élément de base (21) sur un coté de direction de positionnement étendu de l'élément d'étanchéité creux (22).

2. Structure d'étanchéité d'une ouverture de portière arrière selon la revendication 1, dans laquelle le premier angle et le second angle sont 0 degré et 70 degrés par rapport à une ligne (X) dans un sens longitudinal du véhicule, respectivement.

3. Structure d'étanchéité d'une ouverture de portière arrière selon la revendication 2, dans laquelle l'angle de fixation de la bande d'étanchéité (2) dans une plage de 35 à 40 degrés par rapport à la ligne (X) dans le sens longitudinal du véhicule.

4. Structure d'étanchéité d'une ouverture de portière arrière selon la revendication 1, dans laquelle l'élément d'étanchéité creux (22) présente une forme de pantographe.

5. Structure d'étanchéité d'une ouverture de portière arrière selon la revendication 1 ou 4, dans laquelle la nervure de commande de positionnement étendu (21b) est formée de façon intégrée sur l'élément de base (21) de sorte qu'une extrémité de la nervure de commande de positionnement étendu (21b) puisse faire saillie jusqu'à un extérieur de l'élément d'étanchéité creux (22) aplati par la portière arrière (3).

6. Structure d'étanchéité d'une ouverture de portière arrière selon la revendication 5, dans laquelle une partie de fixation (41) pour un pare-chocs (4) est formée dans une position cachée par la nervure de commande de positionnement étendu (21b) dans le panneau de corps (1) sur un bord d'extrémité inférieure de l'ouverture de portière arrière.
